# EUROPÄISCHE PATENTANMELDUNG

(11) **EP 0 609 721 A2**
(43) Veröffentlichungstag der Anmeldung: **10.08.1994**
(21) Anmeldenummer: 94100871.6
(22) Anmeldetag: 21.01.1994
(51) Int. Cl.: C04B 41/50, B29C 67/22, C08J 9/02, B32B 5/20, E04C 2/26, B29K 61/04, B29K 105/04, B29L 31/10

(54) **Decklagenmaterial für Schaumstoff enthaltenden Sandwichaufbau und dessen Herstellungsverfahren**

(30) Priorität: 05.02.1993 DE 4303289
(71) Anmelder: Glaswerk Schuller GmbH, D-97877 Wertheim (DE)
(72) Erfinder: Döring, Ralf, Dr., D-97877 Wertheim (DE); Hahmann, Paul, D-97877 Wertheim (DE)
(74) Vertreter: Knoblauch, Andreas, Dr.-Ing.

(57) **Zusammenfassung**

Es wird ein Verfahren zum Herstellen einer Kunststoff-Schaumplatte (1) angegeben, bei dem ein Ausgangsmaterial zwischen zwei Decklagen (3,4) verbracht und eine chemische Schäumungsreaktion des Ausgangsmaterial eingeleitet wird, ein Decklagenmaterial für die Platte mit einer Basis aus einem Vlies oder Gewebe und einer basisch reagierenden Beschichtung, die aus einem pulverförmigen anorganischen Material und weiteren Bestandteilen gebildet ist und einer Kunststoff-Schaumplatte (1) mit einem Kern (2) aus geschäumtem Kunststoff, der zwischen zwei Lagen (3,4) eines Decklagenmaterial angeordnet ist, wobei die mittleren Porengröße im Bereich mindestens einer Lage (3,4) kleiner als in der Mitte (I) des Kerns (2) ist.

## Beschreibung

Die Erfindung betrifft ein Verfahren zum Herstellen einer Kunststoff-Schaumplatte, bei dem ein Ausgangsmaterial zwischen zwei Decklagen verbracht und eine chemische Schäumungsreaktion des Ausgangsmaterial eingeleitet wird, ein Decklagenmaterial für eine Platte mit geschäumten Kern mit einer Basis aus einem Vlies oder Gewebe und einer Beschichtung, die aus einem pulverförmigen anorganischen Material und weiteren Bestandteilen gebildet ist. Ferner betrifft die Erfindung eine Kunststoff-Schaumplatte mit einem Kern aus geschäumten Kunststoff, der zwischen zwei Lagen eines Decklagenmaterials angeordnet ist.

Aus DE 34 08 932 A1 ist es bekannt, auf ein Decklagenmaterial auf Vlies- oder Gewebebasis eine Beschichtung aus 70 bis 94 Gew.-% eines pulverförmigen, anorganischen Materials und 6 bis 30 Gew.-% atro eines Bindemittels aufzubringen. Ein derartiges Decklagenmaterial wird in einer kontinuierlichen Plattenerzeugungsanlage zur Herstellung von beidseitig mit Decklagen versehenen Platten aus flüssigen Ausgangskomponenten, insbesondere zur Herstellung von Gipsplatten und Polyurethan-Hartschaumplatten, verwendet.

Kunststoff-Schaumplatten werden vielfach auf dem Bausektor eingesetzt, beispielsweise zum Zwecke der Wärmedämmung. Hierbei müssen diese Platten eine Vielzahl von einander widersprechenden Forderungen erfüllen. Zum einen muß die Wärmedämmeigenschaft gut sein. Dies verlangt entweder eine relativ große Porengröße oder eine große Dicke. Während die große Porengröße die mechanische Stabilität der Platte beeinträchtigt, erhöht die größere Dicke das Gewicht. In beiden Fällen ist die Platte schwer handhabbar. Entweder neigt sie dazu, beim Transport beschädigt zu werden, oder sie ist nur schwer zu bewegen. Besonders kritisch wird es, wenn derartige Platten in Bereichen eingesetzt werden, wo sie, wenn auch nur kurzzeitig, einer Druckbelastung ausgesetzt sind. Dies ist beispielsweise dann der Fall, wenn die Platten im Dachbereich eines Gebäudes eingesetzt werden. Es bleibt hier in der Regel nicht aus, daß bei der Montage derartiger Platten der Monteur versehentlich eine Platte betritt. Die Trittfestigkeit der Platte reicht jedoch in der Regel nicht aus. Es ist zwar unwahrscheinlich, daß die Platte vollständig durchstoßen wird. Eine Beschädigung der Oberfläche ist in der Regel aber nicht zu vermeiden.

Neben den Wärmedämmeigenschaften soll die Platte natürlich auch Forderungen des Brandschutzes genügen, d.h. sie sollte feuer- oder zumindest flammfest sein, beispielsweise sollte sie in Klasse M1 der französischen Brandschutznorm eingestuft werden können.

Der Erfindung liegt daher die Aufgabe zugrunde, Platten mit verbesserten Gebrauchseigenschaften zur Verfügung zu stellen. Außerdem liegt die Erfindung die Aufgabe zugrunde, ein Decklagenmaterial für solche Platten zur Verfügung zu stellen, die bei der Herstellung zu verbesserten Gebrauchseigenschaften führen.

Diese Aufgabe wird bei einem Verfahren der eingangs genannten Art dadurch gelöst, daß die Intensität der Schäumungsreaktion im Bereich mindestens einer Decklage vermindert wird.

Das grundsätzliche Verfahren zum Herstellung der Kunststoff-Schaumplatte bleibt also gleich. Es wird ein Ausgangsmaterial, das in der Regel aus mehreren Komponenten besteht, zwischen den beiden Decklagen zum Schäumen gebracht. Bei dieser Schäumungsreaktion bilden sich Poren im Kunststoff, deren Größe unter anderem von der Intensität der Schäumungsreaktion abhängig ist. Je höher diese Intensität ist, d.h. je mehr gasförmige Reaktionsprodukte sich bis zur Erstarrung oder Aushärtung des Schaums bilden, desto größer werden die einzelnen Poren. Wenn man nun gezielt in einzelnen Bereichen die Intensität der Schäumungsreaktion vermindert, also die Gasentwicklung hemmt, erreicht man hierdurch eine Verkleinerung der Porengröße, also eine größere Dichte der Platte in diesem Bereich. Je höher die Dichte ist, desto größer wird die mechanische Stabilität an dieser Stelle. Wenn die Platte im Bereich mindestens einer Decklage diese verminderte Porengröße aufweist, hat sie im Bereich dieser Decklage auch eine verbesserte Durchtrittsfestigkeit, ohne daß das Gewicht der Platte im übrigen nennenswert erhöht wird. Da die Porengröße in der Mitte gegenüber anderen Platten, deren Schäumungsreaktion in den Randbereichen nicht gebremst ist, unverändert bleibt, hat die Platte im übrigen auch praktisch die gleichen Eigenschaften im Hinblick auf Wärmedämmung, Schallschutz oder ähnliches.

Bevorzugterweise erfolgt die Schäumungsreaktion unter dem Einfluß eines Katalysators, dessen katalytische Wirkung im Bereich der Decklage vermindert wird. Die Schäumungsreaktion wird also indirekt beeinflußt und zwar über die Beeinflussung des Katalysators. Durch den Katalysator läßt sich lokal, d.h. begrenzt auf einen Bereich in der Nähe der Decklage, wesentlich besser auf die Schäumungsreaktion einwirken als durch eine Veränderung der Umgebungsbedingungen, beispielsweise der Temperatur.

Vorteilhafterweise wird als Katalysator eine Säure verwendet, die im Bereich der Decklage neutralisiert wird. Eine derartige Säure wird beispielsweise beim Aufschäumen von Phenolen verwendet. Sobald die Säure neutralisiert wird, verlangsamt sich die Schäumungsreaktion, d.h. der Porengrößenzuwachs pro Zeiteinheit ist ohne Anwesenheit von Säure oder bei Anwesenheit von geringen Mengen von Säure wesentlich kleiner als in Anwesenheit der unverdünnten oder nicht neutralisierten Säure. Die Neutralisierung der Säure läßt sich chemisch relativ leicht bewerkstelligen. "Neutralisierung" bedeutet hier nicht eine vollständige Beseitigung der sauren Eigenschaften, d.h. es muß nicht exakt der pH-Wert 7 eingestellt werden. Vielmehr reicht es aus, wenn der pH-Wert in die Nähe des Neutralpunktes verschoben wird.

Eine relativ einfache Neutralisierung der Säure ergibt sich dann, wenn bei der Schäumungsreaktion Wasserdampf entsteht und im Bereich der Decklage ein mit Wasser basisch reagierender Stoff bereitgehalten wird. Der Wasserdampf, der in dem basischen reagierenden Stoff zu Wasser kondensiert, bildet dann zusammen mit dem basisch reagierenden Stoff eine Base, die die Säure in diesem Bereich neutralisiert. Wenn der Stoff nicht pur vorliegt, sondern in einem Verbund enthalten ist, dient das Wasser gleichzeitig dazu, denn basisch reagierenden Stoff auszuwaschen und ihn dem Schaum zuzuführen. Da der basisch reagierende Stoff nur lokal in vorbestimmten Bereichen, nämlich im Bereich der Decklage, bereitgehalten wird, ist die Wirkung des basisch reagierenden Stoffs auch auf diesen Bereich lokal begrenzt. Die Schaumbildung und damit die Ausbildung der Porengrößen in anderen Bereichen bleibt im wesentlichen unbeeinflußt.

Vorteilhafterweise wird der basisch reagierende Stoff als Beschichtung auf die Decklage aufgetragen. Die Decklage kann also bereits vor der Schäumungsreaktion fertiggestellt werden. Sobald der Schaum in den Bereich der Decklage gelangt, wird die Schäumungsreaktion durch den basisch reagierenden Stoff abgebremst.

Vorteilhafterweise wird der basisch reagierende Stoff zusammen mit einem Bindemittel vor dem Auftragen in eine fließ- oder streichfähige Form gebracht. Er läßt sich dann relativ gleichmäßig auf die Decklage aufbringen. Das Bindemittel sorgt dafür, daß er auf der Decklage verbleibt.

In allen Fällen wird der Kunststoff-Schaum zum Aushärten gebracht. Dies kann einfach durch Abwarten geschehen. In vielen Fällen härtet der Schaum in einer gewissen Zeitspanne nach dem Aufschäumen aus. Gegebenenfalls kann man die Platte mit dem noch nicht ausgehärteten Schaumkern veränderten Umgebungsbedingungen aussetzen, beispielsweise die Platte erwärmen oder bestrahlen.

Erfindungsgemäß reagiert das pulverförmige anorganische Material des Decklagenmaterials der eingangs genannten Art basisch oder enthält zumindest einen basisch reagierenden Anteil.

Durch die Verwendung eines derartigen Decklagenmaterials läßt sich eine Kunststoff-Schaumplatte relativ leicht herstellen. Es ist an sich bekannt, ein Decklagenmaterial der eingangs genannten Art zu verwenden, um beim Aufschäumen des Kunststoffs ein Verkleben des Kunststoffs mit der Herstellungsvorrichtung, insbesondere darin enthaltenen Plattenbändern, zu verhindern. Durch die Beschichtung des Decklagenmaterials mit dem basisch reagierenden oder zumindest einen basisch reagierenden Anteil enthaltenden pulverförmigen anorganischen Materials läßt sich nun bei der Herstellung der Kunststoff-Schaumplatte die gewünschte Struktur erreichen, nämlich größere Poren im Innern und kleinere Poren und damit eine verbesserte mechanische Stabilität im äußeren Bereich. Die Decklage weist damit eine Barriere- oder Sperrwirkung gegenüber flüssigem Schaum während der Herstellung der Platte auf. Andererseits gewährleistet sie eine gute Verzahnung mit dem Schaum. Mit dem Decklagenmaterial läßt sich eine hohe Durchstoßfestigkeit der Außenfläche erreichen. Durch die Verwendung des anorganischen Materials lassen sich Brandschutznormen relativ weitgehend erfüllen. So läßt sich eine Schaumplatte mit einem derartigen Decklagenmaterial in Klasse M1 der französischen Brandschutznorm einstufen. Die Fähigkeit, basisch zu reagieren, ändert am Brandverhalten überhaupt nichts. Das Decklagenmaterial bleibt wasserdampfdurchlässig. Es ist gegen Bitumen durchlässig, aber dennoch stabil. Insbesondere bei Verwendung von Glasfasern als Basis für das Vlies oder Gewebe erhält man eine dimensionsstabile, verrottungsfeste und klimafeste Decklage.

Vorteilhafterweise enthalten die weiteren Bestandteile ein organisches alkalibeständiges Bindemittel. Ein derartiges Bindemittel führt zu einer verbesserten Handhabbarkeit des Decklagenmaterials. Das pulverförmige anorganische Material wird hiermit zuverlässig an der Basis gehalten. Da das Bindemittel alkalibeständig ist, wird es durch die basische Reaktion beim Schäumen in den Randbereichen des Schaumes nicht angegriffen. Das Bindemittel sollte auch bei höheren Temperaturen (etwa 180 - 220 °C) thermisch stabil sein.

Vorteilhafterweise weist das pulverförmige anorganische Material gute adhäsive Eigenschaften gegenüber dem Vlies- oder Gewebematerial auf und ist beispielsweise ein hydraulisches Bindemittel. In diesem Fall läßt sich die benötigte Menge an organischem Binder ganz drastisch reduzieren. Der organische Binder ist das Hauptproblem bei der Verbesserung der Brandschutzfähigkeit. Je kleiner der Anteil des organischen Binders ist, desto besser ist das Brandverhalten. Die Bindungswirkung, die im bekannten Fall (DE 34 08 932 A1) durch das organische Bindemittel aufgebracht werden mußte, wird nun anteilig durch das pulverförmige anorganische Bindemittel erbracht. Die Kombination von beiden Bindemitteln führt zu einer hohen Stabilität des Decklagenmaterials bei der Verarbeitung, ohne das Brandverhalten zu beeinträchtigen.

Bevorzugterweise ist das pulverförmige anorganische Material Zement, insbesondere Portland-Zement. Zement ist ein relativ preisgünstiges Produkt, das auch in größeren Mengen zur Verfügung steht. Seine Verarbeitung bietet praktisch keine Schwierigkeiten. Er kann mit Wasser angerührt werden, um auf die Basis aufgetragen zu werden. Insbesondere im Baubereich sind die meisten Bedienungspersonen mit dem Umgang mit Zement enthaltenen Elementen vertraut. Die Weiterverarbeitung der montierten Kunststoff-Platten, beispielsweise ein Verputzen, kann ohne größere Schwierigkeiten und vor allem ohne zusätzlichen Aufwand bei der Vorbereitung erfolgen.

Vorzugsweise enthalten die weiteren Bestandteile einen Zementverzögerer. Im Schaum der Kunststoffplatte kann noch Säure verbleiben. Insbesondere dann, wenn die Platten in einem Metallgerüst aufgehängt sind und einer Atmosphäre ausgesetzt sind, die Wasserdampf enthält, kann die Säure aus den Platten herausgelöst werden, was zu Korrosionserscheinungen am Metallgerüst führen kann. Durch den Zement wird die Säure abgepuffert, so daß ihre schädigende Wirkung klein gehalten werden kann. Durch den Zement- oder Aushärterverzögerer werden die alkalischen Eigenschaften des Zements über einen längeren Zeitraum aufrechterhalten, so daß die Abnahme der Säure im Kunststoffschaum und die Abnahme der Alkalität des Zements in etwa gleichlaufend erfolgt. Auch nach einer längeren Zeit, also etwa mehreren Monaten oder sogar mehrere "Jahre", ist der Zement in der Lage, aus dem Kunststoff herausgewaschene Säure abzupuffern. Als Zementverzögerer lassen sich, wie es aus der Literatur bekannt ist, beispielsweise Zucker oder Zitronensäure verwenden.

Es hat sich als vorteilhaft herausgestellt, daß die Beschichtung 91 bis 96 Gew.-% des pulverförmigen, anorganischen Materials, 3 bis 6 Gew.-% des Bindemittels, 0,02 bis 0,2 Gew.-% des Zementverzögerers und 0,5 bis 4 Gew.-% Beschichtungsadditive, jeweils bezogen auf das Gewicht der Trockenmasse, enthält. Natürlich sind die einzelnen Komponenten so aufeinander abgestimmt, daß sich eine Gesamtmenge von 100 % ergibt. In jedem Fall ist aber ersichtlich, daß nur eine relativ kleine Menge von organischem Bindemittel, nämlich 6 Gew.-% oder weniger erforderlich ist. Als Beschichtungsadditive können Verdicker, Netzmittel, Hydrophobierungsmittel und/oder Farbstoffe verwendet werden, wie sie aus der Fachliteratur bekannt sind.

Die Erfindung betrifft auch eine Kunststoff-Schaumplatte der eingangs genannten Art, bei der der geschäumte Kunststoff über die Dicke des Kerns eine ungleichmäßige Porengrößenverteilung aufweist, wobei die mittleren Porengröße im Bereich mindestens einer Lage kleiner als in der Mitte des Kerns ist.

Die Platte hat also in ihren Randbereichen eine größere Dichte, was sie, wie erwähnt, mechanisch stabiler macht. Insbesondere wird die Durchtrittsfestigkeit erhöht.

Mit besonderem Vorteil ist der Kunststoff ein Phenol. Mit Phenolschaum lassen sich die gewünschten Eigenschaften hinsichtlich Wärmedämmung, mechanische Stabilität und Schalldämmung relativ gut erzielen.

Auch ist bevorzugt, daß das oben beschriebene Decklagenmaterial verwendet wird. Dieses Decklagenmaterial ist gasoffen und flüssigkeitsoffen, aber selektiv dicht gegenüber den Phenolschäumen.

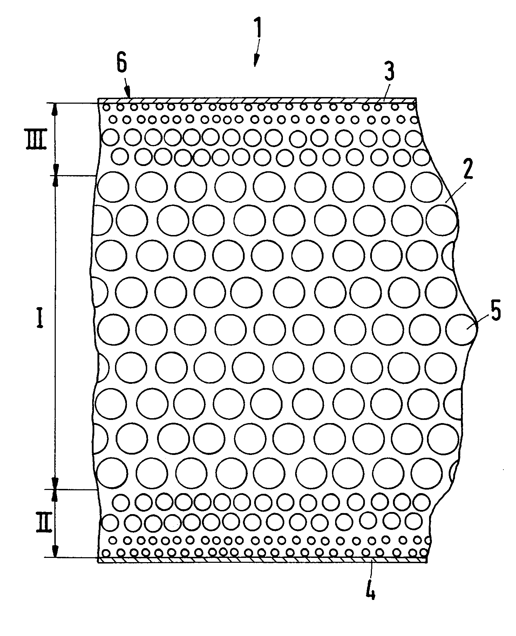

Die Erfindung wird im folgenden anhand eines Ausführungsbeispiels beschrieben. Hierin zeigt die einzige Figur einen schematischen Querschnitt durch eine Phenolschaumplatte.

Eine Phenolschaumplatte 1 weist einen aus einem geschäumten Phenol bestehenden Kern 2 auf, der zwischen zwei Lagen 3, 4 eines Decklagenmaterial angeordnet ist. Der Kern weist Poren 5 auf. Hierbei ist die mittlere Porengröße in einem mittleren Bereich I des Kernes wesentlich größer als in Randbereichen II, III, die den Decklagen 3, 4 benachbart sind. Die Randbereiche II, III sind hier übertrieben dick dargestellt. In den Randbereichen II, III hat der Kern 2 eine wesentlich größere Dichte als in seinem mittleren Bereich I. Hierdurch erhöht sich die mechanische Stabilität des Kernes 2 und damit der Platte 1 insgesamt. Insbesondere wird die Durchstoßfestigkeit der Außenflächen erhöht.

Das die Lagen 3, 4 bildende Decklagenmaterial besteht aus einer Basis, die durch ein Glasfaser-Vlies oder -Gewebe gebildet ist, und einer Beschichtung 6. Die Beschichtung 6 besteht zu 91 bis 96 Gew.-% aus einem alkalischen, anorganischen pulverförmigem Material. Voraussetzung ist, daß dieses Material selbst basisch reagiert oder aus einer Mischung besteht, die mindestens einen basisch reagierenden Bestandteil enthält. Zement, insbesondere Portland-Zement, ist besonders geeignet. Weiterhin weist die Beschichtung einen relativ geringen Anteil im Bereich von 3 bis 6 Gew.-% eines organischen Bindemittels auf. Das organische Bindemittel muß alkalibeständig sein und ein hohes Pigmentbindevermögen besitzen. Das Bindemittel muß thermisch stabil bis ca. 180 bis 200° C sein. Damit ist grundsätzlich eine sehr breite Anzahl von Bindemitteln einsetzbar. Vorzugsweise werden hier wässrige Acrylatdispersionen verwendet. Ferner enthält die Beschichtung einen Zement- oder Aushärteverzögerer mit einem Anteil von 0,02-0,2 Gew.-%. Hierbei können grundsätzlich alle Zementverzögerer eingesetzt werden. Als Beispiel seien Zucker oder Zitronensäure genannt. Der Zementverzögerer verzögert die Aushärtung des Zements. Ferner enthält die Beschichtung Beschichtungsadditive mit einem Anteil von 0,5-4 Gew.-%, wie Verdicker, Netzmittel/Farbstoffe und Hydrophobierungsmittel. Alle Angaben beziehen sich auf die Trockenmasse. Die Anteilsgröße der einzelnen Bestandteile wird so gewählt, daß sich bei der Summe ein Wert von 100 % ergibt.

Die Beschichtung wird mit Wasser angerührt und kann dann beispielsweise mit einem Rakel oder mit einem Spritzverfahren auf die Basis aufgetragen und sodann getrocknet werden. Auch praktisch alle anderen bekannten Beschichtungsverfahren sind hier anwendbar.

Zur Herstellung der Phenolschaumplatte 1 werden zwischen die Lagen 3, 4 des Decklagenmaterials Ausgangskomponenten des Phenols eingebracht und eine Säure zugegeben. Die Säure dient als Katalysator für eine Schäumungsreaktion, bei der das Phenol aufschäumt und die Poren 5 bildet. Die Intensität der Reaktion und damit die Größe der Poren 5 ist unter anderem abhängig von der Menge und Qualität, d.h. dem pH-Wert, des zur Verfügung stehenden Katalysators.

Bei der Schäumungsreaktion entsteht Wasserdampf, der durch die wasserdampf-durchlässige Decklagen 3, 4 dringen und zur Beschichtung 6 gelangen kann. Der Wasserdampf kondensiert zum größten Teil in der Beschichtung 6 und wäscht diese in einem sehr geringen Maße aus, so daß ein alkalisches Wasser entsteht. Dieses alkalische Wasser neutralisiert die Säure, hebt also den pH-Wert an. Auch wenn hier keine vollständige Neutralisierung (pH-Wert 7) erreicht werden kann, werden doch die Eigenschaften des Katalysators verschlechtert, so daß die Schäumungsreaktion in den Randbereichen II, III nur noch mit einer verringerten Intensität ablaufen kann. Die Größe der Poren 5 verkleinert sich dadurch drastisch. Die Dichte des Kernes 5 in den Randbereichen II, III nimmt zu. Damit erhöht sich auch die Durchstoßfestigkeit und die mechanische Stabilität der Phenolschaumplatte 1.

Die Decklagen 3, 4 verhindern während der Herstellung also nicht nur, daß der Phenolschaum die für die Herstellung benötigte Form oder Vorrichtung verklebt, in dem sie eine Barrierewirkung gegenüber dem flüssigen Phenolschaum während der Herstellung aufweisen, sie beeinflussen auch den Aufbau des Kerns 5 in ganz erheblichem Maße. Dennoch können die Decklagen 3, 4 eine gute Verzahnung mit dem Phenolschaum eingehen. Die Decklagen 3, 4 bleiben wasserdampfdurchlässig. Aufgrund des hohen Anteils an organischem Material und des geringen Anteils an organischem Bindemittel ergeben sich sehr gute Brandschutzeigenschaften der Platte. Durch den Aushärteverzögerer für Zement bleibt die Pufferwirkung des Zements gegenüber aus dem Kern 5 austretender Säure über eine relativ lange Zeit erhalten, so daß eine Korrosionswirkung auf Trägerkonstruktionen sehr gering gehalten werden kann. Die so hergestellte Phenolschaumplatte weist eine durchlässige, aber gegenüber Bitumen stabile Decklage auf, die dimensionsstabil, verrottungsfest und klimafest ist.

### Beispiel:

Auf eine Basis aus einem Glasfaservlies wird eine in Wasser angerührte Mischung aus 93,7 Gew.-% atro Portland-Zement, 3,85 Gew.-% atro einer wässrigen Acrylatdispersion, 0,08 Gew.-% atro Zitronensäure als Aushärteverzögerer für Zement und 2,37 Gew.-% atro Verdicker, Netzmittel, Farbstoffe und Hydrophobierungsmittel mit Hilfe eines Rakels aufgetragen und unter Umgebungstemperatur getrocknet. Das so hergestellte Decklagenmaterial wird für die Herstellung der Phenolschaumplatte verwendet. Hierbei läßt man nach dem Aufschäumen den Phenolschaum durch Ruhen aushärten.

## Patentansprüche

1. Decklagenmaterial für eine Platte mit geschäumten Kern mit einer Basis aus einem Vlies oder Gewebe und einer Beschichtung, die aus einem pulverförmigen anorganischen Material und weiteren Bestandteilen gebildet ist, dadurch gekennzeichnet, daß das pulverförmige anorganische Material basisch reagiert oder zumindest einen basisch reagierenden Anteil enthält.

2. Decklagenmaterial nach Anspruch 1, dadurch gekennzeichnet, daß die weiteren Bestandteile ein organisches alkalibeständiges Bindemittel enthalten.

3. Decklagenmaterial nach Anspruch 1 oder 2, dadurch gekennzeichnet, daß das pulverförmige anorganische Material gute adhäsive Eigenschaften gegenüber dem Vlies- oder Gewebematerial aufweist.

4. Decklagenmaterial nach Anspruch 3, dadurch gekennzeichnet, daß das pulverförmige anorganische Material Zement, insbesondere Portland-Zement ist.

5. Decklagenmaterial nach einem der Ansprüche 1 bis 4, dadurch gekennzeichnet, daß die weiteren Bestandteile einen Zementverzögerer enthalten.

6. Decklagenmaterial nach einem der Ansprüche 1 bis 5, dadurch gekennzeichnet, daß die Beschichtung 91 bis 96 Gew.-% des pulverförmigen, anorganischen Materials, 3 bis 6 Gew.-% des Bindemittels, 0,02 bis 0,2 Gew.-% des Zementverzögerers und 0,5 bis 4 Gew.-% Beschichtungsadditive enthält.

7. Kunststoff-Schaumplatte mit einem Kern aus geschäumtem Kunststoff, der zwischen zwei Lagen eines Decklagenmaterial angeordnet ist, dadurch gekennzeichnet, daß der geschäumte Kunststoff über die Dicke des Kerns (2) eine ungleichmäßige Porengrößenverteilung aufweist, wobei die mittleren Porengröße im Bereich mindestens einer Lage (3, 4) kleiner als in der Mitte (I) des Kerns (2) ist.

8. Kunststoff-Schaumplatte nach Anspruch 7, dadurch gekennzeichnet, daß der Kunststoff ein Phenol ist.

9. Kunststoff-Schaumplatte nach Anspruch 7 oder 8, dadurch gekennzeichnet, daß das Decklagenmaterial nach einem der Ansprüche 7 bis 12 ausgebildet ist.

10. Verfahren zum Herstellen einer Kunststoff-Schaumplatte, bei dem ein Ausgangsmaterial zwischen zwei Decklagen verbracht und eine chemische Schäumungsreaktion des Ausgangsmaterial eingeleitet wird, dadurch gekennzeichnet, daß die Intensität der Schäumungsreaktion im Bereich mindestens einer Decklage vermindert wird.

11. Verfahren nach Anspruch 10, dadurch gekennzeichnet, daß die Schäumungsreaktion unter dem Einfluß eines Katalysators erfolgt, dessen katalytische Wirkung im Bereich der Decklage vermindert wird.

12. Verfahren nach Anspruch 11, dadurch gekennzeichnet, daß als Katalysator eine Säure verwendet wird, die im Bereich der Decklage neutralisiert wird.

13. Verfahren nach Anspruch 12, dadurch gekennzeichnet, daß bei der Schäumungsreaktion Wasserdampf entsteht und im Bereich der Decklage ein mit Wasser basisch reagierender Stoff bereitgehalten wird.

14. Verfahren nach Anspruch 13, dadurch gekennzeichnet, daß der basisch reagierende Stoff als Beschichtung auf die Decklage aufgetragen wird.

15. Verfahren nach Anspruch 14, dadurch gekennzeichnet, daß der basisch reagierende Stoff zusammen mit einem Bindemittel vor dem Auftragen in eine fließ- oder streichfähige Form gebracht wird.
